# EUROPÄISCHE PATENTSCHRIFT

(11) **EP 2 241 789 B1**
(45) Veröffentlichungstag und Bekanntmachung des Hinweises auf die Patenterteilung: **15.02.2012**
(21) Anmeldenummer: 10006793.3
(22) Anmeldetag: 24.11.2001
(51) Int. Cl.: F16H 61/16, F16H 59/08, F16H 63/42

(54) **Verfahren zur Erhöhung der Fahrsicherheit beim Betrieb von Fahrzeugen mit integriertem Automatgetriebe durch Signalisierung der Akzeptanz einer gewünschten Fahrzustandänderung und System zur Steuerung einer Getriebebaueinheit**
Method to enhance safety of vehicle driving with automatic transmission by signaling acceptance of desired change of running state of a vehicle and system for transmission control
Méthode d'amélioration de la sécurité lors de l'utilisation d' un véhicule à transmission automatique par signalisation de l'acceptance d'un changement de l'état de marche de celui-ci et système de contrôle d'une unité de transmission

(30) Priorität: 29.01.2001 DE 10104130; 02.08.2001 DE 10137902
(43) Veröffentlichungstag der Anmeldung: 20.10.2010
(62) Teilanmeldung aus: 01128008.8
(73) Patentinhaber: Voith Turbo GmbH & Co. KG, 89522 Heidenheim (DE)
(72) Erfinder: Graf, Gottfried, 73466 Röttingen (DE); Bürk, Richard, 88433 Alberweiler (DE); Stark, Uli, 89547 Gerstetten (DE)
(74) Vertreter: Senft, Stefan Manfred

(56) Entgegenhaltungen:
- DE-A1- 19 810 479
- DE-A1- 19 920 001
- DE-U1- 20 020 621
- DE-U1- 29 919 274

## Beschreibung

Die Erfindung betrifft ein Verfahren zur Erhöhung der Fahrsicherheit beim Betrieb von Fahrzeugen mit integriertem Automatgetriebe durch Signalisierung der Akzeptanz einer gewünschten Fahrzustandsänderung nach Betätigung einer Fahrzustandsvorwahleinrichtung durch Ansteuerung der Getriebebaueinheit, insbesondere Signalisierung des tatsächlich einzustellenden Fahrzustandes nach Betätigung einer Fahrzustandsvorwahleinrichtung durch Ansteuerung der Getriebebaueinheit.

In Fahrzeugen eingesetzten Automatgetrieben ist eine Steuervorrichtung mit einer Steuereinrichtung in Form eines Getriebesteuergerätes zugeordnet, welches neben dem Fahrerwunsch eine Mehrzahl bestimmter Größen, die Randbedingungen des Einsatzes beschreibend, verarbeitet und dementsprechend die Stellgrößen zur Betätigung der einzelnen Schaltelemente zur Änderung eines Fahrzustandes bzw. des ausnutzbaren Betriebsbereiches der Antriebsmaschine bildet. Die Vorwahl eines Fahrerwunsches erfolgt in der Regel über eine entsprechende Vorwahleinrichtung, welche in unterschiedlicher Form vorliegen kann. Zunehmend finden dabei, insbesondere im Nutzkraftfahrzeugbereich, Tastschaltereinrichtungen Verwendung, denen gleichzeitig zur Erkennung der aktivierten Taste eine Anzeigeneinheit in Form einer Beleuchtung, die in der Taste integriert ist, zugeordnet ist. Die Vorwahleinrichtung, insbesondere Tastenschaltereinrichtung, ist dabei mit dem Getriebesteuergerät vorzugsweise elektronisch verbunden. Die Kopplung erfolgt in der Regel beim Einsatz in Fahrzeugen über ein Datenkommunikationsnetz in Form eines CAN-Buses. Die optischen Anzeigenmittel sind dabei derart mit den einzelnen Bedien- bzw. Betätigungselementen der Vorwahleinrichtung gekoppelt, daß eine Betätigung eines bestimmten Bedien- bzw. Betätigungselementes gleichzeitig eine Aktivierung des diesem zugeordneten optischen Anzeigemittels bewirkt. Als vorwählbare Grundfahrzustände werden dabei die nachfolgend genannten Fahrzustände angesehen - "Vorwärtsfahrt", "Rückwärtsfahrt" und "Neutral". Insbesondere der Fahrzustand "Vorwärtsfahrt" kann noch einmal in mehrere Unterzustände unterteilt werden, die die möglichen Gangbereiche charakterisieren. Da es jedoch während des Fahrbetriebes zu Zuständen kommen kann, in denen der aktuelle Fahrerwunsch nicht einstellbar ist und sich das Fahrzeug demzufolge anders verhält, als über die Tastenschaltereinrichtung angezeigt, kann der Fahrer in der Regel nur sehr spät auf ein derartiges Fehlverhalten reagieren. Der Zeitraum des Überraschtseins und ein Fehlverhalten des Fahrzeuges bilden dabei erhebliche Unfallquellen.

Aus der DE 198 10 479 A1 ist ein Automatikgetriebe für Kraftfahrzeuge sowie ein Verfahren, welches unter den Wortlaut des Oberbegriffs des Anspruchs 1 fällt, bekannt. Dieses weist ein elektronisches Getriebesteuergerät mit einem elektrischen Fahrstufenwählelement auf, welches in der Lage ist, eine optische, akustische und/oder haptische Rückmeldung an den Fahrer auszugeben, wenn kein Schaltvorgang mehr möglich ist.

Aus der DE 299 19 274 U1 ist ein Gangwahlschalter zum Einstellen einer Schaltstellung beziehungsweise eines Gangs in einem automatischen Getriebe eines Fahrzeugs bekannt. Dabei ist zum Einstellen einer Schaltstellung beziehungsweise eines Gangs nur ein einziges Bedienelement vorgesehen, über welches die in dem automatischen Getriebe vorhandene Schaltstellung beziehungsweise jeder Gang einstellbar ist. Das Bedienelement ist dafür mit einem Display ausgestattet, welches alphanumerisch oder durch eine entsprechende Symbolik die aktuell eingestellte Schaltstellung beziehungsweise den aktuell eingestellten Gang anzeigt. Das Bedienelement und das Display sind mit einer elektronischen Schaltungsanordnung verbunden, die an einem im Fahrzeug angeordneten Datenbus angeschlossen ist.

Letztlich beschreibt auch die DE 200 20 621 U1 eine Vorwahleinrichtung, insbesondere in Form eines Tastenschalters. Diese ist geeignet zur Vorgabe eines Fahrerwunsches zur Einstellung oder Änderung eines Fahrzustands durch Ansteuerung der Getriebebaueinheit in Antriebssträngen eines Fahrzeugs. Diese weist ein jeweils einem bestimmten Fahrzustand zugeordnetes Bedien- oder Betätigungselement sowie eine diesem zugeordnete optische Anzeigeeinrichtung auf. Der Aufbau der optischen Anzeigeeinrichtung in Form einer Lumineszenzdiode wird dabei im Detail beschrieben.

Der Erfindung lag daher die Aufgabe zugrunde, ein Verfahren zur Erhöhung der Fahrsicherheit beim Betrieb von Fahrzeugen mit integrierten Automatgetrieben durch Signalisierung des tatsächlichen Fahrzustandes nach erfolgter Betätigung einer Fahrzustandsvorwahleinrichtung durch Ansteuerung der Getriebebaueinheit dahingehend zu verbessern, daß für den Fahrer in jedem Fall sicher erkennbar ist, ob der von ihm an der Vorwahleinrichtung getätigte Fahrerwunsch tatsächlich von der zur Getriebebaueinheit gehörenden Steuerung umgesetzt wurde und eingestellt werden kann. Dabei soll auf möglichst einfache Art und Weise eine sichere Rückmeldung über die Akzeptanz des gewählten Fahrzustandes erfolgen, wobei ohnehin zur Steuerung der Getriebebaueinheit erforderliche Größen verarbeitet werden und der steuerungstechnische und konstruktive Aufwand damit minimal gehalten wird. Des weiteren soll ein hohes Maß an der Richtigkeit dieser Information gewährleistet werden.

Die erfindungsgemäße Lösung ist durch die Merkmale des Anspruchs 1 charakterisiert. Vorteilhafte Ausgestaltungen sind in den Unteransprüchen beschrieben.

Das Verfahren zur Erhöhung der Fahrsicherheit beim Betrieb von Fahrzeugen mit integriertem Automatgetriebe durch Signalisierung des tatsächlichen Fahrzustandes nach erfolgter Betätigung einer Fahrzustandsvorwahleinrichtung, unter der eine manuell betätigbare Vorwahleinrichtung zur Vorgabe eines Fahrerwunsches nach Änderung oder Einstellung eines bestimmten Fahrzustandes zu verstehen ist, durch Ansteuerung der Getriebebaueinheit ist erfindungsgemäß gemäß einem besonders vorteilhaften ersten Lösungsansatz dadurch charakterisiert, daß nach Betätigung der FahrzustandsVorwahleinrichtung vor der Signalisierung der Akzeptanz bzw. der Betätigung des betätigten Betätigungselementes zwei Informationen verarbeitet werden, wobei lediglich bei Vorliegen beider Informationen mindestens ein für den Fahrer erkennbares Signal zur Erkennung, daß der gewünschte Fahrzustand aktiviert wird oder aber, daß der gewünschte Fahrzustand nicht aktivierbar ist, gebildet wird. Im allgemeinen werden dabei wenigstens die folgenden Grundfahrzustände unterschieden:
- Vorwärtsfahrt
- Rückwärtsfahrt
- Neutral- bzw. Leerlauf

Dabei kann der Fahrzustand Vorwärtsfahrt und auch der Fahrzustand Rückwärtsfahrt noch in weitere Unterzustände unterteilbar sein, die durch die Beschränkung der Ausnützbarkeit des Betriebsbereiches einer mit der Getriebebaueinheit gekoppelten Antriebsmaschine charakterisiert sind und in der Regel durch Gangstufen beschreibbar sind. Als Informationen wird dabei eine erste Information über die tatsächlich aktuell eingelegte Gangstufe und eine zweite Information über die Vornahme eines Gangstufenwechsels verarbeitet. Lediglich in dem Fall, in welchem sowohl die Informationen über die aktuell eingelegte Gangstufe als auch eine positive Information über die Vornahme eines Gangstufenwechsels vorliegen, d.h. "Gangstufenwechsel betätigt", werden diese dahingehend ausgewertet, daß der vom Fahrer gewünschte Fahrzustand auch tatsächlich aktiviert wird und ein Signal zur Erkennung der Aktivierung als Bestätigung gebildet wird. Im anderen Fall, d.h. bei Vorliegen beider Informationen, wobei jedoch die Information über die Vornahme eines gerade tatsächlichen Gangstufenwechsels mit einem Inhalt belegt ist, welcher einen momentanen Gangstufenwechsel nicht erfaßt bzw. verneint, wird mindestens ein Signal zur Erkennung, daß der gewünschte Fahrzustand nicht aktivierbar ist, erzeugt. Ist eine der beiden Informationen nicht verfügbar, erfolgt immer eine Fehlermeldung. Diese kann unabhängig von der Art der fehlenden Information sein oder aber abhängig, d.h. jeder Art der Information ist eine unterschiedliche Fehlermeldung zugeordnet.

Dabei wird bei Fehlen einer der beiden auszuwertenden Informationen, d.h. eine der Informationen liegt überhaupt nicht vor, eine Fehlermeldung mit dem Inhalt, daß für den Fahrer überhaupt kein erkennbares Signal vorhanden ist, d.h. das Signal dadurch charakterisiert ist, daß sich an dem bisherigen Signalzustand nichts ändert, für den Fahrer gebildet und signalisiert. Bei üblicher Ausgabe eines Signales in Form eines optischen Signales kann dies durch Beibehaltung des Beleuchtungszustandes an den einzelnen Bedien- bzw. Betätigungselementen charakterisiert sein oder bei Auswahl eines akustischen Signales kann auf das akustische Signal verzichtet werden. Das heißt, bei Fehlen einer der zu verarbeitenden Informationen erfolgt keine für den Fahrer erkennbare Reaktion. Eine Möglichkeit besteht darin, entsprechend der Auswahl der möglichen Signalisierung diese entsprechend einem bestimmten Fehlercode erfolgen zu lassen. Bei optischen Signalen kann dies beispielsweise durch ein Blinken, d.h. eine zeitliche wechselweise Änderung der Pulsweite realisiert werden, während bei einem akustischen Signal ebenfalls ein Piepen durch zeitliche wechselweise Änderung der Frequenz oder einen Signalton, welcher durch eine bestimmte Zeitdauer gleicher Frequenz oder sich langsam ändernder Frequenz charakterisiert ist, erfolgen. Dies hängt jedoch von den konkreten Gegebenheiten, insbesondere der Art der Vorwahleinrichtung und der Art der Anzeige ab, um eine Verwirrung des Fahrers zu vermeiden.

Die erfindungsgemäße Lösung ermöglicht es, aus ohnehin am Getriebesteuergerät oder über einen CAN-Bus bei Einbindung in ein Datenkommunikationsnetzwerk verfügbaren Größen für den Fahrer auf einfache Art und Weise durch Berücksichtigung zweier Größen eine Information über die Akzeptanz des Fahrerwunschbefehls an der Getriebesteuereinheit und damit Sicherheit bezüglich einer möglichen Rückmeldung zur Einstellung des tatsächlichen Fahrerwunsches zu erhalten. Ein anderes Verhalten am Fahrzeug ist durch Ausgabe der Fehlermeldung für den Fahrer sehr schnell erkennbar und kann mit einer entsprechenden, der Situation angebrachten Reaktion beantwortet werden. Insbesondere bei der bevorzugten Angabe der Akzeptanz des Fahrerwunsches durch Leuchtmittel an Tastschalteinrichtungen, welche durch das gleichmäßige ununterbrochene Leuchten der gewählten Taste charakterisiert ist, kann der Fahrer auf einfache Art und Weise feststellen, ob die von ihm gewünschte Gangstufe oder der Fahrzustand tatsächlich eingestellt werden wird. Alle anderen Signale deuten auf einen Fehler hin und werden vom Fahrer sofort erkannt.

Die Information über die aktuell eingelegte Gangstufe kann dabei beispielsweise aus nachfolgend genannten Größen ermittelt werden:
- Größen, die die Stellung einzelner Schaltelemente, die eine Gangstufe charakterisieren, beschreiben
- Größen, welche das Verhalten der den einzelnen Schaltelementen zugeordneten Stelleinrichtungen beschreiben, beispielsweise Beaufschlagung der Stelleinrichtungen von Ventileinrichtungen, Anlegen von Strömen oder Drücken

Die Informationen über die Vornahme eines Gangstufenwechsels, d.h. einer Änderung der Gangstufen und damit verbunden Deaktivierung der Schaltelemente der gehenden, d.h. zu verlassenden Gangstufe und Aktivierung der Schaltelemente der kommenden, d.h. einzulegenden Gangstufe können ebenfalls aus den genannten Größen ermittelt oder abgeleitet werden oder aber direkt durch die Änderung der Funktionsstellungen oder Beaufschlagung der Schaltelemente ermittelt werden. Diese werden insbesondere aus den die Stelleinrichtung beschreibenden Größen bzw. deren Betätigung wenigstens mittelbar charakterisierende Größen abgeleitet.

Als für den Fahrer erkennbare Signale zur Erkennung der Zustände - gewünschter Fahrzustand wird aktiviert oder gewünschter Fahrzustand ist nicht aktivierbar - können unterschiedliche Signale oder eine Signalkombinationen verwendet werden. Denkbar sind optische Signale, wobei jedem Funktionszustand ein entsprechendes Signal oder Signalkombination zugeordnet ist. In Analogie dazu können auch akustische Signale zum Einsatz gelangen. Bei optischen Signalen kann eine Unterscheidung durch die Intensität, insbesondere die Veränderung der Pulsweite erfolgen. Zusätzlich besteht die Möglichkeit, die Intensität zeitlich zu verändern, d.h. die Pulsweite in bestimmten Zeitintervallen unterschiedlich zu variieren. In Analogie gilt dies auch für akustische Signale, wobei hier die Signalfrequenz verändert wird.

In einer besonders vorteilhaften Ausgestaltung der erfindungsgemäßen Lösung findet das Verfahren zur Erhöhung der Fahrsicherheit beim Betrieb von Fahrzeugen sowie beim Einsatz von Fahrzeugen mit Vorwahleinrichtungen in Form von Tastschalteinrichtungen Verwendung. Diese sind dabei dadurch charakterisiert, daß jedem einzelnen Bedien- bzw. Betätigungselement in Form einer Taste ein entsprechendes optisches Anzeigemittel zugeordnet ist. Dieses ist in vorteilhafter Weise um die Rückkopplung des Signales für den Fahrer leicht überschaubar und direkt zu ermöglichen, im Bedien- bzw. Betätigungselement, d.h. der Taste integriert. Eine andere Möglichkeit besteht in der Anzeige an einem gesonderten Display, wobei dies jedoch derart zu gestalten ist, daß für den Fahrer sehr einfach eine entsprechende Fahrzustandsänderung einem entsprechenden Bedien- bzw. Betätigungselement zuordenbar ist.

In einer besonders vorteilhaften Weiterentwicklung werden dabei einzelnen fehlenden Informationen unterschiedliche Fehlersignale zugeordnet. Dies ermöglicht es dem Fahrer, auf den Informationsmangel zu schließen, welcher auch für andere Systeme im Fahrzeug von Bedeutung sein kann. Vorzugsweise wird beim Fehlen der ersten Information über die aktuell eingelegte Gangstufe eine Fehlermeldung in Form eines optischen oder akustischen Signales erzeugt, welche dadurch charakterisiert ist, daß der Fahrer an der Vorwahleinrichtung oder der Anzeigeeinrichtung keine Reaktion bemerkt. Bei Fehlen der zweiten Information wird eine Fehlermeldung dahingehend ausgegeben, die den Fahrer sehr stark darauf hinweist, daß eine gewünschte Beurteilung über die Akzeptanz des Fahrerwunsches an dem Getriebesteuergerät nicht erfolgen kann. Dazu wird eine Fehlermeldung gewählt, die vom Fahrer mit höchster Wahrscheinlichkeit bemerkt werden muß. Bei optischen Signalen wird dies in der Regel durch Blinken, d.h. Wechsel der Intensität der Helligkeit erzeugt, während bei akustischen Signalen ein starkes Piepen oder ein schriller Signalton denkbar sind.

Sind beide Informationen verfügbar und die Information über die Vornahme eines tatsächlichen Gangstufenwechsels ist negativ belegt, d.h. es ist kein Gangstufenwechsel aktiv, wird dem Fahrer vorzugsweise der aktuell eingelegte Gang bzw. Fahrzustand signalisiert. Daraus ist für den Fahrer ersichtlich, ob seinem Fahrerwunsch entsprochen worden ist oder nicht und er erkennt zugleich den aktuellen eingestellten Fahrzustand. Bei Ausführungen mit Tastschaltereinrichtungen ist in diesem Fall das dem tatsächlich eingelegten Fahrzustand zugeordnete Bedien- bzw. Betätigungselement beleuchtet.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung den Grundaufbau einer Getriebesteuervorrichtung mit erfindungsgemäß gestaltetem Erkennungssystem;
- Figur 2: verdeutlicht eine besonders vorteilhafte Ausgestaltung einer Getriebesteuervorrichtung mit einem in der Vorwahleinrichtung integriertem Erkennungssystem.

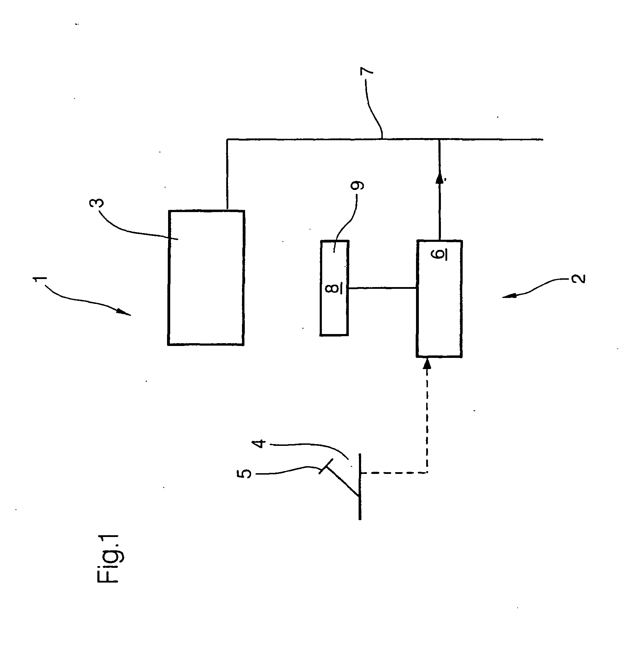

Figur 1 verdeutlicht in stark schematisierter und vereinfachter Darstellung das Grundprinzip eines erfindungsgemäß zur Erhöhung der Fahrsicherheit verwendeten Erkennungssystems 1 zur Signalisierung bzw. Erkennung des tatsächlichen Fahrmodus für den Fahrer beim Einsatz in einem Antriebssystem eines Fahrzeuges. Das Erkennungssystem 1 ist einer Steuervorrichtung zur Einstellung oder Änderung eines Fahrzustandes durch Ansteuerung einer Getriebebaueinheit 3 zugeordnet. Bei der

Getriebebaueinheit 3 handelt es sich dabei um ein Automatgetriebe. Zur Vorgabe eines Fahrerwunsches nach Änderung der Betriebsweise beziehungsweise des Fahrzustandes durch Ansteuerung der Getriebebaueinheit ist eine Fahrzustandsvorwahleinrichtung vorgesehen, welche nachfolgend nur als Vorwahleinrichtung 4 bezeichnet wird. Diese umfaßt wenigstens ein Bedienbeziehungsweise Betätigungselement 5, aus dessen Stellung der Fahrerwunsch nach Änderung der Betriebsweise beziehungsweise des Fahrzustandes ableitbar ist.

Als Fahrzustände werden wenigstens die nachfolgend genannten unterschieden:
- "Vorwärts" oder "Drive" für Vorwärtsfahrt
- "Rückwärts" für Rückwärtsfahrt
- "Neutral", d.h. Leerlauf

Des weiteren besteht die Möglichkeit, diese sogenannten Grundfahrzustände in weitere zu untergliedern, beispielsweise durch Angabe der möglichen ausnutzbaren zulässigen Gangstufen , d.h. der Vorgabe des Ausnutzungsbereiches des Betriebsbereiches der Antriebsmaschine im Zusammenwirken mit dem Getriebe.

Zur Einstellung des gewünschten Fahrzustandes ist die Vorwahleinrichtung 4 mit der Steuervorrichtung 2, insbesondere der zu dieser gehörigen Steuereinrichtung 6, welche in der Regel als Steuergerät vorliegt, verbunden. Dabei besteht die Möglichkeit einer direkten Verbindung zwischen der Vorwahleinrichtung 4 und der Steuereinrichtung 6. Üblicherweise sind diese Einrichtungen jedoch im Fahrzeug über ein Kommunikationsnetz, vorzugsweise in Form eines Can-Buses 7 miteinander verbunden. Das Erkennungssystem 1 umfaßt eine Signaleinrichtung 8, vorzugsweise in Form einer Anzeigeeinheit 9 zur optischen Wiedergabe eines oder mehrerer Signale für den nach Vorwahl eines Fahrzustandes tatsächlich vorliegenden Betriebszustand und damit des Fahrzustandes im Fahrzeug. Dazu werden nach erfolgter Betätigung der Vorwahleinrichtung 4, mit welcher ein Fahrerwunsch nach Änderung oder Einstellung einer bestimmten Betriebsweise beziehungsweise eines bestimmten Fahrzustandes zur Ansteuerung der Getriebebaueinheit 3 kundgetan wird, mindestens zwei Informationen in Form von Botschaften, eine erste Botschaft, welche eine Information über die tatsächlich momentan eingelegte Gangstufe oder den durch diese Gangstufe charakterisierten Fahrmodus enthält und eine zweite Information in Form einer Botschaft über die Verarbeitung des Fahrerwunsches in Form einer Information über die Vornahme des Schaltvorganges bzw. der gewünschten Fahrzustandsänderung ausgewertet. Diese beiden Mindestinformationen werden dabei durch Auswertung zur Erkennung des aktuellen Fahrzustandes genutzt. Dabei werden zwei Zustände unterschieden. Eine Auswertung mit Signalisierung des Fahrzustandes erfolgt dabei nur, wenn beide Informationen vorliegen, d.h. mit einem Inhalt bestückt sind. Fehlt eine Information ganz, erfolgt eine Signalisierung einer Fehlermeldung, bei optischen Signalen beispielsweise in Form eines Blinksignales oder es wird ganz auf die Abgabe eines optischen Signales verzichtet. Der erste Zustand ist dadurch charakterisiert, daß die erste Information über den aktuellen tatsächlich eingelegten Gang nicht verfügbar ist.

Liegen beide Informationen vor und befindet sich das Bedien- beziehungsweise Betätigungselement 5 in einer, einen bestimmten Gangbereich oder Betriebsbereich charakterisierenden Stellung und ist der durch die aktuell eingelegte Gangstufe beschriebene Fahrzustand nicht identisch zu diesem und beinhaltet die zweite Information, daß ein Fahrzustandswechsel nicht vorgenommen wird, wird über das Erkennungssystem 1, insbesondere die Signaleinrichtung 8 in Form der Anzeigeneinheit 9 der tatsächlich vorliegende Fahrzustand angezeigt. Liegen beide Informationen vor, und der Gangstufenwechsel, das heißt die

Änderung des Fahrzustandes ist positiv, wird der mittels dem Bedienbeziehungsweise Betätigungselement 5 vorgewählte Fahrzustand angezeigt. Durch die Verarbeitung der beiden genannten Informationen kann der aktuelle Betriebszustand sicher angezeigt werden. Für den Fahrer bietet dies ein höchstes Maß an Sicherheit, da dieser somit auf ein Verhalten des Fahrzeuges, welches nicht dem Fahrerwunsch entspricht, rasch reagieren kann.

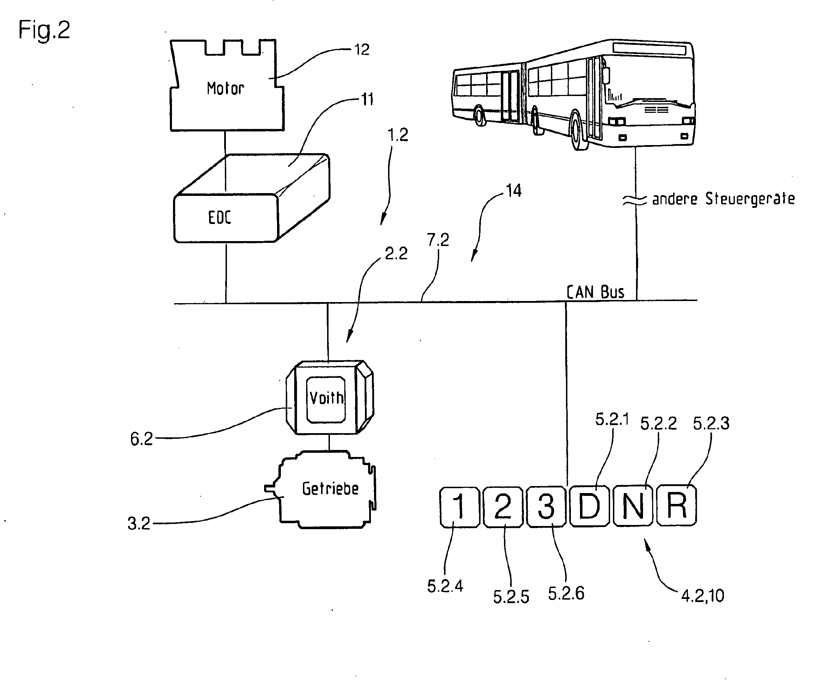

Die Figur 2 verdeutlicht anhand einer schematisierten Darstellung eine vorteilhafte Ausgestaltung eines Erkennungssystems 1.2 für eine Getriebebaueinheit 3.2 mit einer Vorwahleinrichtung 4.2 in Form einer Tastenschalteinrichtung 10. Der Getriebebaueinheit 2 ist eine Steuervorrichtung 2.2 zugeordnet. Diese ist über ein Datenkommunikationsnetzwerk in Form des Can-Buses 7.2 mit anderen Steuergeräten sowie der Vorwahleinrichtung 4.2 und der Steuerung 11 für die Antriebsmaschine 12 in Form einer Verbrennungskraftmaschine verbunden. Die Tastenschalteinrichtung 10 umfaßt dabei mindestens drei Bedienelemente 5.2.1 bis 5.2.3 für die unterschiedlichen Fahrzustände - Vorwärtsfahrt, Rückwärtsfahrt und die Leerlaufposition, welche auch als Neutralstellung bezeichnet wird. Zusätzlich können die Fahrzustandsbereiche durch weitere, diese in mehrere Betriebsbereiche unterteilende Gangstufenbereiche eingeteilt werden. Im dargestellten Fall sind dabei für die einzelnen Fahrzustandsbereiche D für Vorwärtsfahrt, N für die Leerlaufposition und R für die Rückwärtsfahrt jeweils die Bedien- beziehungsweise Betätigungselemente 5.2.1 bis 5.2.3 vorgesehen, wobei zusätzlich der Fahrzustandsbereich für die Vorwärtsfahrt in drei Gangstufenbereiche 5.2.4 bis 5.2.6 unterteilt ist. Die Vorwähleinrichtung 4 ist elektronisch über den Can-Bus 7.2 mit der Steuervorrichtung 2, insbesondere der Steuereinrichtung 11 der Getriebebaueinheit 3 gekoppelt. Die Anzeigeneinheit 9.2 ist dabei mit der Vorwahleinrichtung 4.2 zu einer baulichen Einheit zusammengefaßt. Insbesondere ist jedem einzelnen

Bedien- beziehungsweise Betätigungselement 5.2.1 bis 5.2.n eine entsprechende optische Anzeigeeinrichtung in Form einer Lumineszenzdiode oder einer Glühlampe zugeordnet. Dabei werden in einer besonders vorteilhaften Ausgestaltung zwei Grundzustände für die Beleuchtung unterschieden - eine Beleuchtung mit schwacher Helligkeit, welche auch als sogenannte Suchbeleuchtung bezeichnet wird und die Funktionsbeleuchtung, das heißt eine Beleuchtung mit hoher Helligkeit sowie als dritter möglicher Zustand ein Fehlen der Beleuchtung. Die Steuerung der Helligkeit erfolgt dabei durch Pulsweitenmodulation, wobei die Helligkeit für die beiden Zustände Suchbeleuchtung und Funktionsbeleuchtung getrennt über Konfigurationsbotschaften eingestellt werden kann. Zur Einstellung der Helligkeit kann eine Regelung vorgesehen werden, die in Abhängigkeit von der Betriebsspannung die Pulsweite korrigiert, um ein definiertes Helligkeitsverhalten zu erzielen.

In der Regel werden beim Systemstart, beispielsweise bei Inbetriebnahme des Fahrzeuges durch Aktivierung des Zündschlüssels alle Leuchtmittel in Betrieb genommen, wobei diese im Zustand "Suchbeleuchtung" betrieben werden. Um eine sichere Anzeige des aktuellen Fahrzustandes zu gewährleisten, werden erfindungsgemäß die Informationen über die Aktivierung eines Schaltvorganges und den aktuell eingelegten Gang ausgewertet. Die einzelnen Botschaften werden dabei in vorteilhafter Weise über den Can-Bus 7.2 bezogen. Vorzugsweise wird das Gesamtsystem 14 im SAE-J1939-Modus betrieben. Entsprechend dieses Protokolls sind die Informationen über einen eingeleiteten Schaltvorgang in ETC1 enthalten, während die Informationen bezüglich der aktuellen Gangstufe in ETC2 abgelegt sind. Diese Informationen werden ausgewertet, wobei die Auswertung entweder direkt in einer der Vorwahleinrichtung 4.2 zugeordneten Intelligenz erfolgen kann, oder aber über die Steuereinrichtung 6.2 der Getriebebaueinheit 3.2. Dabei wird angestrebt, daß immer eine aktive, das heißt betätigte Taste als Bedien- beziehungsweise Betätigungselement 5.2.1 bis 5.2.n in der Funktionsbeleuchtung leuchtet, das heißt, daß dieser Taste zugeordnete Leuchtmittel in Funktionsbeleuchtung aktiviert wird, wenn die über die Vorwahleinrichtung 4.2 vorgegebene Auswahl vom Getriebesteuergerät 6.2 akzeptiert wurde. Bei Nicht-Akzeptanz wird ein anderes optisches Signal in Form einer Fehlermeldung, beispielsweise eines Wechsels zwischen Suchbeleuchtung und Funktionsbeleuchtung erzeugt. Fehlen die oben genannten Informationen, wird die Beleuchtung deaktiviert und die den Bedien- beziehungsweise Betätigungselementen 5.2.1 bis 5.2.n zugeordneten Anzeigemittel zur Ausgabe eines optischen Signales leuchten nur noch in der Suchbeleuchtung.

Bei Nichtverfügbarkeit der Information über die tatsächlich aktuell eingelegte Gangstufe wird die Beleuchtung deaktiviert. Dies bedeutet, daß die Anzeigemittel nur noch schwach leuchten, insbesondere bei Zuordnung zu jedem einzelnen Bedien- beziehungsweise Betätigungselement 5.2.1 bis 5.2.n.. Fehlt dabei die Information über die Vornahme eines Gangstufenwechsels, das heißt die Betätigung der entsprechenden Schaltelemente für den gewünschten einzulegenden Fahrzustand beziehungsweise Gang, kann dies durch ein Blinken, welches jedoch bei späterer Akzeptanz zur Beleuchtung wechseln kann.

Bezugnehmend auf die dargestellte Ausführung der Tastschalteinrichtung 10.2 werden nachfolgend einige mögliche Zustände genannt:
- Betätigung der Bedien- beziehungsweise Betätigungselement 5.2.4, 5.2.5 und 5.2.6 und/oder Betätigung des Betätigungselementes 5.2.1 für die Wahl des Fahrzustandes Vorwärtsfahrt und Information über die aktuell eingelegte Gangstufe beziehungsweise den aktuell eingelegten Fahrzustand "Neutralstellung" oder "Rückwärtsfahrt" und die Information bezüglich des Schaltvorganges mit dem Inhalt, daß gerade kein Schaltvorgang aktiv ist, bewirkt, daß die an der Vorwahteinrichtung 4.2 betätigte Taste als Bedien- beziehungsweise Betätigungselement 5.2.n durch die dieser zugeordnete Anzeigeeinrichtung 13 zur Ausgabe eines optischen Signales in Form eines Blinkens aktiviert wird. Fehlt dabei die Information über die aktuelle Vornahme eines Schaltprozesses gänzlich und ist lediglich die Information über ETC2 verfügbar, wird nur der tatsächlich über das Steuergerät 11 beziehungsweise den CAN-Bus ermittelte Gang an der Tastschalteinrichtung 10 angezeigt. Dies bedeutet, daß nur die Taste, das heißt das Bedien- beziehungsweise Bedienelement 5 aktiviert ist, welches dem tatsächlich eingelegten Gang beziehungsweise Fahrzustand entspricht. Sind irrtümlicherweise mehrere Tasten gleichzeitig betätigt, wird lediglich das Bedien- beziehungsweise Betätigungselement angezeigt, welches über den Can-Bus 7.2 übermittelt wird. Dabei wird in der Regel die kleinste Gangsperrtaste angegeben, das heißt die Gangstufe die eingelegt ist und nicht überschritten werden kann.
- Bei Betätigung des Bedienelementes 5.2.3 für "Rückwärtsfahrt" und Vorliegen einer Information über die eingelegte Gangstufe oder den aktuellen Fahrzustand in "Leerlaufstellung" oder "Vorwärtsfahrt" und Information über die Vornahme eines Gangstufenwechsels, welche eine Nichtvornahme beinhaltet, bewirkt eine Anzeige an der aktuell gedrückten Taste, hier dem Bedien- beziehungsweise Betätigungselement 5.3.3 für die Rückwärtsfahrt. Sind gleichzeitig mehrere Tasten, das heißt Bedienbeziehungsweise Betätigungselemente 5.2.1 bis 5.2.n betätigt, wird immer das Bedien- beziehungsweise Betätigungselement 5.2.1 bis 5.2.n angezeigt, insbesondere beleuchtet, dessen Stellung über CAN ermittelt wird.

Nur im Fehlerfall wechselt die Beleuchtung in den sogenannten Errormode. In diesem werden im Falle der Tastschalteinrichtung 10 alle Bedienbeziehungsweise Betätigungselemente beleuchtet. Die Blinkzeiten sind dabei parametrierbar.

### Bezugszeichenliste

- 1: Erkennungssystem
- 2: Steuervorrichtung
- 3: Getriebebaueinheit
- 4: Vorwahleinrichtung
- 5: Bedien- beziehungsweise Betätigungselement
- 6: Steuereinrichtung
- 7: Can-Bus
- 8: Signaleinrichtung
- 9: Anzeigeeinheit
- 10: Tastschaltereinrichtung
- 11: Steuereinrichtung
- 12: Antriebsmaschine
- 13: Anzeigemittel
- 14: System

## Patentansprüche

1. Verfahren zur Erhöhung der Fahrsicherheit beim Betrieb von Fahrzeugen mit integriertem Automatgetriebe (3) durch Signalisierung der Akzeptanz einer gewünschten Fahrzustandsänderung nach Betätigung einer Fahrzustandsvorwahleinrichtung (4) durch Ansteuerung der Getriebebaueinheit (3); wobei wenigstens die folgenden Grundfahrzustände unterschieden werden:
- Vorwärts
- Rückwärts
- Neutral bzw. Leerlauf;
1.1 bei welchem mindestens ein, die Betätigung der Fahrzustandsvorwahleinrichtung (4) charakterisierendes und für den Fahrer erkennbares Signal gebildet werden kann;
1.2 bei welchem nach Betätigung der Fahrzustandsvorwahleinrichtung (4) eine erste Information über die aktuell eingelegte Gangstufe im Automatgetriebe (3) und eine zweite Information, welche die Vornahme eines Gangstufenwechsels zu diesem Zeitpunkt oder die Vornahme eines geringfügig verspäteten tatsächlichen Gangstufenwechsels charakterisiert, ermittelt und ausgewertet werden;
1.3 bei welchem bei Vorliegen beider Informationen jeweils mindestens ein für den Fahrer erkennbares Signal zur Erkennung für einen der nachfolgenden Zustände gebildet wird;
- der über die Fahrzustandsvorwahleinrichtung (4) gewünschte Fahrzustand wird aktiviert
oder
- der über die Fahrzustandsvorwahleinrichtung (4) gewünschte
Fahrzustand ist nicht aktivierbar,
wobei die Signale für die genannten Zustände unterschiedlich voneinander sind, **dadurch gekennzeichnet, dass**
1.4 bei Nichtvorliegen einer der beiden Informationen eine Fehlerinformation gebildet wird.

2. Verfahren nach Anspruch 1, **dadurch gekennzeichnet, daß** bei Fehlen der ersten Information die Fehlerinformation für den Fahrer eine Deaktivierung der Signalisierung beinhaltet.

3. Verfahren nach Anspruch 1, **dadurch gekennzeichnet, daß** bei Fehlen der zweiten Information als Fehlerinformation ein gegenüber dem Signal zur Erkennung des Zustandes "gewünschter Fahrzustand wird aktiviert" und "gewünschter Fahrzustand ist nicht aktivierbar" unterschiedliches Signal erzeugt wird.

4. Verfahren nach einem der Ansprüche 1 bis 3, **dadurch gekennzeichnet, daß** für den Zustand "gewünschter Fahrzustand wird aktiviert" das die Betätigung der Fahrzustandsvorwahleinrichtung (4) charakterisierende und erkennbare Signal ausgegeben wird.

5. Verfahren nach einem der Ansprüche 1 bis 4, bei welchem im Zustand "gewünschter Fahrzustand nicht aktivierbar" ein oder mehrere Signale gebildet werden, deren Inhalt in der Angabe der tatsächlich eingelegten Gangstufe unabhängig von dem an der Fahrzustandsvorwahleinrichtung (4) vorgewählten Fahrzustand besteht.

6. Verfahren nach einem der Ansprüche 1 bis 5, **dadurch gekennzeichnet, daß** die Signale zur Erkennung der Zustände von optischen Signalen gebildet werden.

7. Verfahren nach Anspruch 5 oder 6, **dadurch gekennzeichnet, daß** der Zustand "gewünschter Fahrzustand wird aktiviert" durch ein optisches Signal mit gleichbleibender Helligkeit gebildet wird.

8. Verfahren nach einem der Ansprüche 6 oder 7, **dadurch gekennzeichnet, daß** die Fehlermeldung oder das Signal für den Zustand "gewünschter Fahrzustand nicht aktivierbar" durch zeitlich wechselweise Helligkeit charakterisiert ist.

9. Verfahren nach einem der Ansprüche 6 bis 8, bei welchem die Vorwahleinrichtung (4) als Tastenschalter (10) mit mindestens einem Betätigungselement (5) für jeden vorwählbaren Fahrzustand ausgeführt ist, und jedem Betätigungselement (5) ein Leuchtmittel zugeordnet ist, wobei jedes Leuchtmittel in den drei nachfolgend genannten Leuchtzuständen betrieben werden kann:
- keine Beleuchtung
- Suchbeleuchtung, d.h. Beleuchtung mit schwacher Helligkeit
- Funktionsbeleuchtung, d. h. Beleuchtung mit starker Helligkeit
**gekennzeichnet durch** die folgenden Merkmale:
9.1 bei welchem im Zustand "gewünschter Fahrzustand wird aktiviert" das dem betätigtem Betätigungselement (5) zugeordnete Leuchtmittel in Funktionsbeleuchtung betrieben wird;
9.2 bei welchem im Zustand "gewünschter Fahrzustand wird nicht aktiviert" das dem betätigten Betätigungselement (5) zugeordnete Leuchtmittel wechselweise in Funktions- und Suchbeleuchtung betrieben wird.

10. Verfahren nach Anspruch 9, **dadurch gekennzeichnet, daß** bei Fehlen der ersten Information die Leuchtmittel in Suchbeleuchtung betrieben werden.

11. Verfahren nach Anspruch 9, **dadurch gekennzeichnet, daß** bei Fehlen der zweiten Information das Leuchtmittel, welches dem Betätigungselement (5) zugeordnet ist, das der tatsächlich eingelegten Gangstufe an der Vorwahleinrichtung (4) entspricht, in Funktionsbeleuchtung betrieben wird.

12. Verfahren nach einem der Ansprüche 1 bis 5, **dadurch gekennzeichnet, daß** die Signale zur Erkennung der Zustände von akustischen Signalen gebildet werden.

13. Verfahren nach Anspruch 12, **dadurch gekennzeichnet, daß** der Zustand "gewünschter Fahrzustand wird aktiviert" durch ein zeitlich begrenztes akustisches Signal mit gleicher Frequenz gebildet wird.

14. Verfahren nach einem der Ansprüche 12 oder 13, **dadurch gekennzeichnet, daß** die Fehlermeldung oder das Signal für den Zustand "gewünschter Fahrzustand nicht aktivierbar" durch akustische Signale mit zeitlich wechselweiser Frequenz und/oder Amplitude charakterisiert ist.

15. Verfahren nach einem der Ansprüche 1 bis 14, **dadurch gekennzeichnet, daß** mindestens der Grundfahrzustand "Vorwärts" in weitere Betriebszustände in Form von zulässigen Gangstufen unterteilt wird.

## Claims

1. A method for enhancing the driving safety when operating vehicles with integrated automatic transmission (3) by signalling the acceptance of a requested change of driving condition after actuating a driving condition preselection system (4) through operation of the transmission unit (3); whereas at least the following basic driving conditions are distinguished:
- Forward
- Reverse
- Neutral or Idle;
1.1 in which at least one driver-recognisable signal, characterising the actuation of the driving condition preselection system (4) can be formed;
1.2 for which after actuation of the driving condition preselection system (4) a first piece of information on the currently selected gear stage in the automatic transmission (3) and a second piece of information, which characterises the realisation of a gear shift at this precise moment or the realisation of a slightly delayed real gear shift, are determined and interpreted;
1.3 in which in consideration of both pieces of information at least one driver-recognisable signal is formed respectively for detecting one of the following modes;
- the desired driving condition is activated via the driving condition preselection system (4)
or
- the desired driving condition cannot be activated via the driving condition preselection system (4),
whereas the signals are distinct from one another for said conditions,
**characterised in that**
1.4 in the absence of one of both information an error information is formed.

2. The method of claim 1, **characterised in that** in case of an erroneous first piece of information, the error information contains a deactivation of the signalling for the driver.

3. The method of claim 1, **characterised in that** in case of an erroneous second piece of information a signal distinct from the signal for detecting the condition "desired driving condition activated" and "desired driving condition cannot be actuated" is generated as an error information.

4. The method according to one of the claims 1 to 3, **characterised in that** for the condition "desired driving condition activated" the recognisable signal, characterising the actuation of the driving condition preselection system (4) is output.

5. The method according to one of the claims 1 to 4, in which in the condition "impossible to activate the desired driving condition" one or several signals are formed, whose contents consists of the indication of the actually switched gear stage independent of the driving condition preselected at the driving condition preselection system (4).

6. The method according to one of the claims 1 to 5, **characterised in that** the signals for recognising the conditions are formed by optical signals.

7. A method according to claim 5 or 6, **characterised in that** the condition "desired driving condition activated" is formed by an optical signal with constant brightness.

8. The method according to any of the claims 6 or 7, **characterised in that** the error message or the signal for the condition "impossible to activate the desired driving condition" is **characterised by** a brightness temporarily flashing.

9. The method according to one of the claims 6 to 8, in which the preselection device (4) is designed as a push-button (10) with at least one actuating element (5) for each preselectable driving condition, and an illumination means is associated with each actuating element (5), whereas every illumination means can be operated in said three subsequent illumination conditions:
- no illumination
- search illumination, i.e. illumination with low brightness
- function illumination, i.e. illumination with high brightness **characterised by** the following features:
9.1 in which in the condition "desired driving condition activated" the illumination means associated with the actuated actuating element (5) is operated in function illumination;
9.2 in which in the condition "desired driving condition not activated" the illumination means associated with the actuated actuating element (5) is operated alternately in function illumination and in search illumination.

10. The method of claim 9, **characterised in that** in case of an erroneous first piece of information the illumination means are operated in search illumination.

11. The method of claim 9, **characterised in that** in case of a second piece of information the illumination means, which is associated with the actuating element (5), which corresponds to the actually switched gear stage at the driving condition preselection system (4), is operated in function illumination.

12. The method according to one of the claims 1 to 5, **characterised in that** the signals for recognising the conditions are formed by acoustic signals.

13. The method of claim 12, **characterised in that** the condition "desired driving condition activated" is formed by a temporally acoustically limited signal with constant frequency.

14. The method according to any of the claims 12 or 13, **characterised in that** the error message or the signal for the condition "impossible to activate the desired driving condition" is **characterised by** acoustic signals with temporarily alternating frequency and/or amplitude.

15. The method according to one of the claims 1 to 14, **characterised in that** at least the basic driving condition "forward" is divided into additional operating modes in the form of admissible gear stages.

## Revendications

1. Procédé permettant de refoncer la sécurité de conduite pendant l'utilisation de véhicules avec transmission automatique intégrée (3) par signalisation de l'acceptation d'un changement de mode de conduite désiré après actionnement d'un dispositif de présélection de mode de conduite (4) par sollicitation de l'ensemble de transmission (3); où l'on peut distinguer au moins les modes de conduite de base suivants:
- Marche avant
- Marche arrière
- Point mort ou ralenti;
1.1 dans lequel au moins un signal reconnaissable par le conducteur, caractérisant l'actionnement du système de présélection de mode de conduite (4) peut être élaboré;
1.2 dans lequel actionnement d'un dispositif de présélection de mode de conduite (4), on obtient et on interprète une première information sur le rapport d'engrenage effectivement enclenché dans la transmission automatique (3) et une seconde information, qui caractérise la réalisation d'un changement de vitesse à ce moment ou la réalisation d'un changement de vitesses légèrement retardé;
1.3 où au regard des deux informations respectivement au moins un signal reconnaissable par le conducteur est élaboré pour reconnaître l'un des modes suivants;
- le mode de conduite désiré est actionné par le biais du système de présélection de mode de conduite (4) ou bien
- le mode de conduite désiré ne peut pas être actionné par le biais du système de présélection de mode de conduite (4),
où les signaux sont distincts les uns des autres pour les modes de conduite mentionnés ci-dessus, **caractérisé en ce que**
1.4 une information d'erreur est élaborée en l'absence de l'une des deux informations.

2. Procédé selon la revendication 1, **caractérisé en ce qu'**en l'absence de la première information l'information d'erreur destinée au conducteur contient une désactivation de la signalisation.

3. Procédé selon la revendication 1, **caractérisé en ce qu'**en l'absence de la seconde information un signal distinct de celui permettant de reconnaître le mode "mode de conduite voulu actionné" et "mode de conduite voulu impossible à actionner" et renvoie ainsi une information d'erreur.

4. Procédé selon l'une quelconque des revendications 1 à 3, **caractérisé en ce que** pour le mode "mode de conduite voulu actionné" le signal reconnaissable et caractérisant l'actionnement du dispositif de présélection de mode de conduite (4) est généré.

5. Procédé selon l'une quelconque des revendications 1 à 4, dans lequel dans le mode "mode de conduite voulu impossible à actionner" l'on élabore un ou plusieurs signaux dont le contenu se compose de l'indication du rapport d'engrenage effectivement enclenché, indépendamment du mode de conduite présélectionné au niveau du dispositif de présélection de mode de conduite (4).

6. Procédé selon l'une quelconque des revendications 1 à 5, **caractérisé en ce que** les signaux permettant de reconnaître les modes sont constitués de signaux optiques.

7. Procédé selon la revendication 5 ou 6, **caractérisé en ce que** le mode "mode de conduite voulu actionné" est constitué d'un signal optique d'une luminosité constante.

8. Procédé selon l'une des revendications 6 ou 7, **caractérisé en ce que** le message d'erreur ou le signal destiné au mode "mode de conduite voulu impossible à actionner" est **caractérisé par** une luminosité alternative dans le temps.

9. Procédé selon l'une quelconque des revendications 6 à 8, dans lequel le dispositif de présélection (4) est sous forme de bouton-poussoir (10) comprenant au moins un élément de commande (5) pour chaque mode de conduite présélectable, et un moyen d'éclairage est associé à chaque élément de commande (5), dans lequel chaque moyen d'éclairage peut adopter les trois modes d'éclairage mentionnés ci-dessous:
- aucun éclairage
- éclairage de recherche, soit un éclairage de faible luminosité
- éclairage de fonction, soit un éclairage de forte luminosité présentant les caractéristiques suivantes:
9.1 dans lequel dans le mode "mode de conduite voulu actionné" le moyen d'éclairage associé à l'élément de commande actionné (5) est commuté en éclairage de fonction;
9.2 dans lequel dans le mode "mode de conduite voulu non actionné" le moyen d'éclairage associé à l'élément de commande actionné (5) est commuté de manière alternée en éclairage de fonction et en éclairage de recherche.

10. Procédé selon la revendication 9, **caractérisé en ce qu'**en l'absence de la première information les moyens d'éclairage sont commutés en éclairage de recherche.

11. Procédé selon la revendication 9, **caractérisé en ce qu'**en l'absence de la seconde information le moyen d'éclairage, qui est associé à l'élément de commande (5), correspondant au rapport d'engrenage effectivement enclenché au niveau du dispositif de présélection de mode de conduite (4), est commuté en éclairage de fonction.

12. Procédé selon l'une quelconque des revendications 1 à 5, **caractérisé en ce que** les signaux permettant de reconnaître les modes sont constitués de signaux acoustiques.

13. Procédé selon la revendication 12, **caractérisé en ce que** le mode "mode de conduite voulu actionné" est constitué d'un signal acoustique limité dans le temps et de fréquence identique.

14. Procédé selon l'une des revendications 12 ou 13, **caractérisé en ce que** le message d'erreur ou le signal destiné au mode "mode de conduite voulu impossible à actionner"' est **caractérisé par** des signaux acoustiques de fréquence et/ou d'amplitude alternatives dans le temps.

15. Procédé selon l'une quelconque des revendications 1 à 14, **caractérisé en ce qu'**au moins le mode de conduite de base "Marche avant" est divisé en d'autres modes de fonctionnement sous forme de rapports d'engrenage admissibles.
